# EUROPEAN PATENT SPECIFICATION

(11) **EP 2 111 052 B1**
(45) Date of publication and mention of the grant of the patent: **22.10.2014**
(21) Application number: 08715185.8
(22) Date of filing: 07.03.2008
(51) Int. Cl.: H04W 4/14, H04W 88/18

(54) **METHOD AND DEVICE FOR SENDING MESSAGE, MESSAGE CENTRAL EQUIPMENT**
VERFAHREN UND GERÄT ZUR NACHRICHTENSENDUNG UND ZENTRALE NACHRICHTENVORRICHTUNG
PROCÉDÉ ET DISPOSITIF D'ENVOI D'UN MESSAGE, ÉQUIPEMENT DE CENTRALE DE MESSAGES

(30) Priority: 09.03.2007 CN 200710086509
(43) Date of publication of application: 21.10.2009
(73) Proprietor: Huawei Technologies Co., Ltd., Longgang District, Shenzhen Guangdong 518129 (CN)
(72) Inventor: PAN, Xin, Shenzhen Guangdong 518129 (CN); LI, Xinjie, Shenzhen Guangdong 518129 (CN); HE, Guxun, Shenzhen Guangdong 518129 (CN)
(74) Representative: Körber, Martin Hans
(86) International application number: PCT/CN2008/070449
(87) International publication number: WO 2008/110105

(56) References cited:
- WO-A1-00/74404
- WO-A2-2004/016013
- CN-A- 1 859 785
- CN-A- 101 022 598
- US-A1- 2007 223 428
- US-B1- 6 208 870
- "3rd Generation Partnership Project; Technical Specification Group Services and System Aspects; Support of SMS and MMS over generic 3GPP IP access (Release 7)" 3GPP STANDARD; 3GPP TR 23.804, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.1.0, 1 September 2005 (2005-09-01), pages 1-25, XP050363742
- "Digital cellular telecommunications system (Phase 2+); Universal Mobile Telecommunications System (UMTS); Technical realization of Short Message Service (SMS) (3GPP TS 23.040 version 6.8.1 Release 6); ETSI TS 123 040" ETSI STANDARDS, LIS, SOPHIA ANTIPOLIS CEDEX, FRANCE, vol. 3-T2, no. V6.8.1, 1 October 2006 (2006-10-01), XP014035453 ISSN: 0000-0001

## Description

### FIELD OF THE INVENTION

The present invention relates in general to communication technologies, and more particularly, to a method and system for delivering messages and a message service center thereof.

### BACKGROUND

Among the numerous value-added communication services, messaging service, such as short message service (SMS), is a widely-used service. The SMS achieves point-to-point message transmission by using signaling links. Currently, communication networks that may provide SMS primarily involve three wireless communication networks, that is, Global System for Mobile Communications (GSM), Code Division Multiple Access (CDMA) system, and Time Division Multiple Access (TDMA) system, which are respectively referred to as GSM communication network, CDMA communication network and TDMA communication network in the following for simplicity. Accordingly, in these communication networks there is respectively a Short Message Service Center (SMSC), which is referred to as GSM SMSC, CDMA SMSC and TDMA SMSC. Alternatively, the SMSCs in the three communication networks may be integrated as an SMSC, which is also referred to as CGT SMSC.

Because quality of service provided by each of the three wireless communication networks varies from area to area, a mobile subscriber may transfer to a different network to get better quality of service. Generally, network transfer is possible to mobile subscribers, especially in the case where the GSM communication network, CDMA communication network and TDMA communication network are all available. For example, a subscriber who is originally a CDMA subscriber may request to transfer to TDMA network without changing the number of his mobile station (MS). Network configuration for the number may be conducted at a network side so as to not tamper with services for the subscriber. Furthermore, devices such as Home Location Register (HLR), Mobile Switching Center (MSC) are generally shared so as to save cost. When an MS transfers to another network, subscriber data (such as network protocol, MSC address) for the MS in the previous communication network is deleted or modified. For example, in the case where the HLR and MSC are provided separately, when an MS transfers to another network, subscriber data for the MS in the previous communication network is deleted directly. Otherwise, in the case where the HLR and MSC are shared, when an MS transfers to another network, subscriber data (such as network protocol) for the MS in the previous communication network is modified.

On the other hand, messaging service is an indispensable service of the present communication system. When an MS transfers to another network, message delivery error may occur. As a result, the MS may not receive messages for itself, which not only impairs the benefit of network-transfer, but also affects the subscriber's service.

The document "3rd Generation Partnership Project; Technical Specification Group Services and System Aspects; Support of SMS and MMS over generic 3GPP IP access (Release 7)" 3GPP STANDARD; 3GPP TR 23.804, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no V7.1.0, 1 September 2005 (2005-09-01) discloses means for providing 3GPP messaging services across WLAN, and, more generically across any form of 3GPP IP access. In particular, it discloses an unsuccessful SMS MT deliver procedure over an IP connection as follows:
1) The UE registers at the IP-Message-GW.
2) The SM-SC forwards the SMS message to the SMS-GMSC.
3) The SMS-GMSC sends a request, including an indication that the SMS-GMSC supports IP messaging to the HLR/HSS to retrieve routeing information. If this indication is set, the SMS-GMSC is able receive and process the three E.164 addresses of MSC, SGSN and IP-Message-GW. Thus, when an user registered on an IP-Message-GW for delivery of SMS messages, the HLR/HSS returns the address of the IP-Message-GW along with the addresses of the MSC and SGSN if available. If the indication of IP messaging support is not received from the SMS-GMSC and the HLR/HSS has three E.164 addresses of MSC, SGSN and IP-Message-GW stored, the HLR/HSS returns a list of the addresses in order of priority to the SMS-GMSC depending on the indicated capabilities (i.e. if the GPRS Support Indicator is received, two addresses, otherwise only one address, should be sent). The HLR/HSS should spoof one of the returned addresses with the IP-Message-GW address, if it is to be sent.
4) If and/or when the SMS-GMSC chooses to deliver the "SMS over IP", the SMS-GMSC delivers the short message to IP-Message-GW, in the same manner that it delivers the short message to an MSC or SGSN, carrying the MSISDN of the destination UE.
5) The IP-Message-GW uses the MSISDN of the destination UE to retrieve its IP address from the local database. The IP-Message-GW then delivers the SMS to the UE. However, the message cannot be delivered successfully.
6) The IP-Message-GW returns a failure deliver report back to the SMS-GMSC (see TS 23.040).
7) In case the reason of failure delivery report is not Memory Capacity Exceeded, based on the addresses received from the HLR/HSS in step 3, the SMS-GMSC shall attempt to deliver the short message via SGSN and/or MSC, as described in TS 23.040. Otherwise, SMS-GMSC returns a failure delivery report back to the SM-SC, referring to the describing in TS 23.040.
8) If all delivery attempts fail, then the SMSC shall decide whether to set the message waiting flags. If it so decides, the SMSC sends MAP-REPORT-SM-DELIVERY-STATUS to the HLR/HSS with the address of the SM-SC having initiated the SMS MT delivery. The indication to the HLR/HSS is extended to indicate the type of SMSC (e.g. normal/voice mail/video mail server).
9) The SMS-GMSC sends a SM deliver report status to the SM-SC (see TS 23.040).

Document WO 00/74404 A1 also provides a relevant method for delivering messages.

### SUMMARY

The present invention relates to a method for delivering messages as described in claim 1, a system for delivering messages as in claim 6, and a message service center as in claim 7. Preferred embodiments are described in the dependent claims.

Various embodiments of the present invention provide a method for delivering messages, which resolves the problem of incorrect message delivery occurred when a mobile terminal transfers to another network.

According to the concept of the above method for delivering messages, a system for delivering messages is provided.

Also, a message service center is provided.

A method for delivering messages, the method being implemented by a message service center when a terminal to which a message is to be delivered makes network transfers among a plurality of communication networks, the method includes:
determining an original communication network to which the message is to be delivered according to a current communication network record of the terminal stored in a current communication network database; delivering the message to the original communication network; upon receiving an error message from the original communication network, determining a next communication network to which the message is to be delivered according to a network-transfer configuration rule, wherein the network-transfer configuration rule specifies a sequence of communication networks used for delivering messages, and the next communication network being any communication network among the plurality of communication networks; delivering the message to the next communication network according to network protocol of the next communication network; receiving a response message for the short message delivery from the next communication network, and updating the current communication network database by recording the next communication network in the current communication network database if the response message is not an error message.

A system for delivering messages includes: a message service center, capable of communicating with a plurality of communication networks, wherein the message service center is configured to deliver messages when a terminal to which a message is to be delivered makes network transfers among the plurality of communication networks, comprising determining an original communication network to which the message is to be delivered according to a current communication network record of the terminal stored in a current communication network database, delivering the message to the original communication network and receiving an error message from the original communication network; and upon receiving an error message from the original communication network, determining a next communication network to which the message is to be delivered according to a network-transfer configuration rule, wherein the network-transfer configuration rule specifies a sequence of the communication networks used for delivering the messages and the next communication network being any communication network among the plurality of communication networks; delivering the message to the next communication network according to network protocol of the next communication network; receiving a response message for the short message delivery from the next communication network; and updating the current communication network database by recording the next communication network in the current communication network database if the response message is not an error message.

A message service center, the message service center delivering messages when a terminal to which a message is to be delivered makes network transfers among a plurality of communication networks, the message service center includes:
a determination unit configured to determine an original communication network to which the message is to be delivered according to a current communication network record of the terminal stored in a current communication network database; a receiving unit configured to receive an error message from a communication network or a delivery-success response message from the communication network; and a message delivery unit configured to deliver the message according to network protocol of the original communication network determined by the determination unit; or to determine a next communication network to which the message is to be delivered according to a network-transfer configuration rule and deliver the message to the next communication network, wherein the message delivery unit comprises: a processing module configured to determine the next communication network to which the message is to be delivered according to the network-transfer configuration rule, the next communication network being any communication network among the plurality of communication networks, when receiving an error message from the original communication network; an encoding module configured to encode the message according to the network protocol of the original communication network determined by the determination unit or the network protocol of the next communication network determined by the processing unit; a transmission module configured to deliver the message encoded by the encoding module; and a storage module configured to store the next communication network of the terminal in the current communication database when the receiving unit receives a delivery-success response message.

The embodiments of the present invention enable message delivery in the case of network-transfer. In the case of network-transfer, because the current communication network of the MS may not be determined, a message may be more likely to be successfully delivered by attempting through a plurality of communication networks. When all the communication networks are traversed, the current communication network of the MS may be certainly found, which ensures successful delivery of the message to the MS. AS a result, impact on the subscriber due to network-transfer may be eliminated and more means for enjoying services are provided to the subscriber so as to convenience the subscriber.

### BRIEF DESCRIPTION OF THE DRAWING(S)

Figure 1 illustrates a flow chart for delivering short messages according to an embodiment of the present invention;
Figure 2 illustrates a flow chart for delivering short messages according to another embodiment of the present invention;
Figure 3 illustrates a flow chart for delivering short messages according to still another embodiment of the present invention;
Figure 4 illustrates a flow chart for delivering short messages according to yet another embodiment of the present invention; and
Figure 5 illustrates a system for delivering messages according to embodiments of the present invention.

### DETAILED DESCRIPTION

To facilitate understanding and implementation of the present invention by those skilled in the art, embodiments of the present invention are described with reference to the accompanying figures in the following.

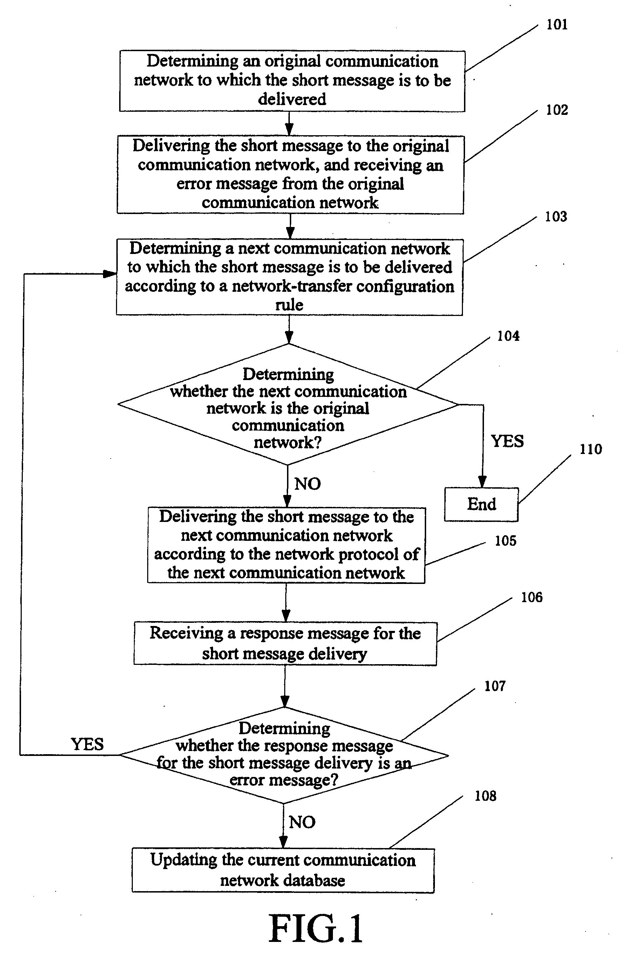

A method for delivering short messages in the case of network-transfer is described with reference to Fig. 1. The method includes the following steps.

Step 101: An original communication network for delivering short messages is determined.

The original communication network may be determined according to a called-ID of a short message. Here, the original communication network is a destination communication network (which is essentially the same as a typical communication network) to which the short message is to be delivered for the first time, which is usually the communication network that a terminal originally joins into. The called-ID may include a called number, an email address, an International Mobile Subscriber Identity (IMSI). Here the terminal may be a mobile terminal or a fixed-network terminal.

Furthermore, in an embodiment of the present invention, the original communication network may be determined according to a current communication network record of the called terminal stored in a current communication network database. In this case, the original communication network is the current communication network of the called terminal recorded in the current communication network database of the called terminal.

Alternatively, a communication network may be selected randomly as the original communication network, or a fixed communication network may be taken as the original communication network.

Step 102: The short message is delivered to the original communication network, and an error message from the original communication network is received. The error message includes at least one of the subscriber power-off, subscriber absence, IMSI fetching error and protocol error.

When delivering the short message, a route request message is firstly transmitted to the HLR. In the case that the HLR does not have data for the called terminal, a route response message with information of subscriber absence or IMSI fetching error is received. In the case where the HLR has data for the called terminal, a route response message with address of the MSC is received.

Upon receiving the route response message with the address of the MSC, the short message is delivered to the called terminal using the network protocol through the MSC. If the called terminal can not identify the network protocol, a protocol error message is received from the terminal.

The above is a scenario when the called terminal no longer exists in the communication network, that is, the called terminal has transferred to another network permanently. In the case where the called terminal switches to another communication network temporarily (temporary network-transfer), the HLR has the data for the called terminal and returns a subscriber power-off information to the SMSC.

Step 103: Upon receiving the error message, a next communication network to which the short message is to be delivered is determined according to a network-transfer configuration rule. The network-transfer configuration rule is used to specify a sequence of communication networks to which the short message is to be delivered. In case of permanent network-transfer, the sequence of communication networks to which the message is to be delivered specified by the network-transfer configuration rule may be determined according to information in the current communication network database, or it may be a predefined fixed sequence. In case of temporary network-transfer, the sequence of communication networks to which the message is to be delivered may also be determined according to a received subscriber power-on notification.

Step 104: It is determined whether the next communication network is the original communication network. If the next communication network is the original communication network, it proceeds to step 110 and ends the flow; while if the next communication network is not the original communication network, step 105 is executed.

Step 105: The short message is delivered to the next communication network according to the network protocol of the next communication network.

Step 106: A response message for the short message delivery is received, which is a successful message or an error message for the short message delivery.

Step 107: It is determined whether the response message for the short message delivery is an error message. If it is an error message, the procedure returns to step 103; otherwise, step 108 is executed.

Step 108: The current communication network database is updated, and therefore when the short message is delivered originally or the error message is received for a further time according to the network-transfer configuration rule, the current communication network of the called terminal is obtained by inquiring the current communication network database, and the short message is delivered to the called terminal according to the network protocol of the current communication network.

Here, Step 104 is executed only in case of permanent network-transfer, and Step 105 is executed for temporary network-transfer.

For other messages such as Multimedia message, those skilled in the art may implement the invention based on the above technical concept without any inventive effort. In the following, a detailed description is given with reference to the figures and embodiments and by taking the processing of a short message as an example.

It is assumed that the communication network includes an HLR, an MSC and an MS. The delivery of the short message is described in detail according to whether the HLR and the MSC are shared, respectively.

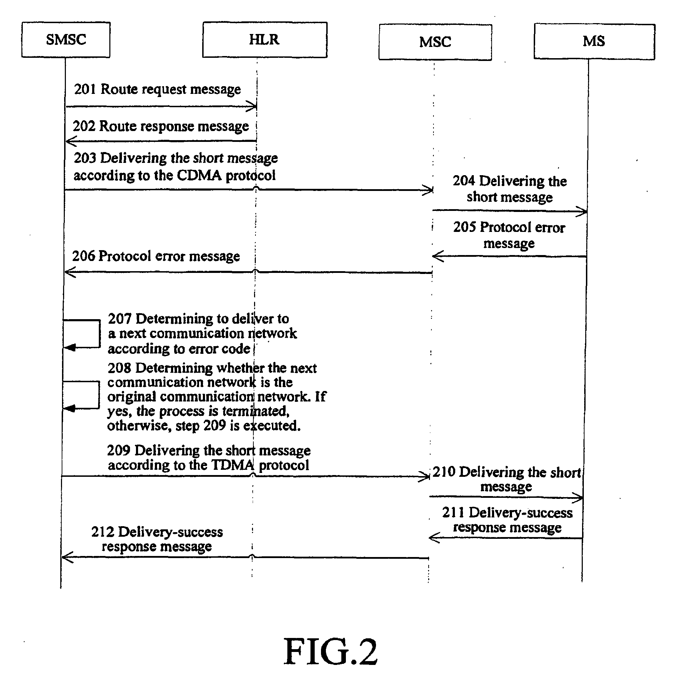

In the embodiment, it is assumed that the HLR and MSC are shared, and the MS has transferred to another network permanently. The method for delivering short messages according to the embodiment is described with reference to Fig. 2.

Step 201: The SMSC transmits a route request message to the HLR.

Step 202: The HLR returns to the SMSC a route response message which carries address of the MSC to which the called MS belongs, and determines a network protocol used for delivering the short message to the called MS according to number of the called MS.

Step 203: The SMSC delivers the short message to the MSC according to the determined network protocol.

Step 204: The MSC delivers the short message to the MS upon receiving the short message.

Step 205: The MS returns a protocol error message including "unknown protocol" to the MSC because the MS has transferred to another network and thus can not identify the short message delivered according to the determined network protocol.

Step 206: Upon receiving the protocol error message, the MSC returns the protocol error message to the SMSC.

Step 207: Upon receiving the protocol error message, the SMSC determines a next communication network to which the short message is to be delivered according to the network-transfer configuration rule.

The network-transfer configuration rule may be a sequence of the communication networks to which the short message is to be delivered. That is, when the protocol error is returned, a next communication network may be determined according to the error and the short message is delivered to the next communication network.

To enable the embodiments of the invention applicable to any network-transfer situation, the network-transfer configuration rule may be set as follows. When the SMSC receives a protocol error from the current communication network to which the short message is to be delivered, the SMSC may determine to deliver the short message to a next communication network according to the error, where the next communication network may be any communication network other than the current communication network. The determination may be done randomly or according to information in the current communication network database or according to a predefined fixed order. In the case of temporary network-transfer, it may also be determined according to a received subscriber power-on notification. For example, if the current communication network is the CDMA communication network, the next communication network may be the GSM communication network or the TDMA communication network.

For example, assuming that the current network protocol is the CDMA protocol, when the SMSC receives the protocol error, the SMSC may deliver the short message to the TDMA communication network with respect to the protocol error. Similarly, if the current network protocol is the TDMA protocol, when the SMSC receives the protocol error, the SMSC may deliver the short message to the GSM communication network with respect to the protocol error. Alternatively, if the current network protocol is the GSM protocol, when the SMSC receives the protocol error, the SMSC may deliver the short message to the CDMA communication network with respect to the protocol error.

Step 208: It is determined whether the next communication network is the original communication network. If the communication network is the original communication network, the flow of short message delivery is terminated and an error processing is performed, such as deleting the short message, secondary buffering etc. Here, the original communication network is the communication network that returned the protocol error for the first time. Otherwise, if the communication network is not the original communication network, then step 209 is executed.

Step 209: The SMSC delivers the short message to the MSC according to a next network protocol.

Step 210: Upon receiving the short message, the MSC delivers the short message to the MS.

Step 211: Because the MS has transferred to another network, the next network protocol may be a network protocol identifiable by the MS. If the MS may identify the next network protocol, then a delivery-success response message is transmitted to the MSC. Otherwise, the procedure turns to step 205 and a protocol error message is transmitted to the MSC.

Step 212: Upon receiving the delivery-success response message, the MSC transmits a delivery-success response message to the SMSC.

In other scenarios where the embodiment of the invention is applied, step 209 is executed directly while skipping step 208, in the case of temporary network-transfer.

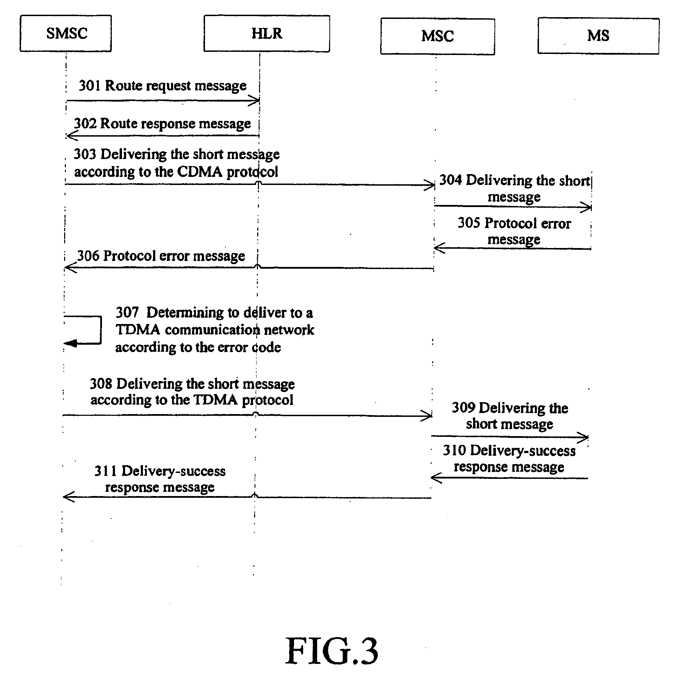

In another exemplary embodiment of the invention, it is assumed that the HLR and MSC are shared, and a subscriber transfers from the CDMA communication network to the TDMA communication network permanently. In the following, a method for delivering short messages according to the present embodiment is described with reference to Fig. 3.

Step 301: The SMSC transmits a route request message to the HLR.

Step 302: The HLR returns to the SMSC a route response message and an address of the MSC to which the called MS belongs. The HLR also determines a network protocol (CDMA protocol) according to a number of the called MS, where the network protocol is used to deliver the short message to the called MS.

Step 303: The SMSC delivers the short message to the MSC according to the determined CDMA protocol.

Step 304: The MSC delivers the short message to the MS, upon receiving the short message.

Step 305: Because the MS has transferred to the TDMA communication network, it can not identify the short message delivered according to the CDMA protocol. As a result, a protocol error message including "unknown protocol" is returned to the MSC.

Step 306: Upon receiving the protocol error message, the MSC returns a protocol error message to the SMSC.

Step 307: Upon receiving the protocol error message, the SMSC determines that the short message should be delivered to the TDMA communication network according to a network-transfer configuration rule.

Step 308: The SMSC delivers the short message to the MSC according to the TDMA protocol.

The SMSC encodes an MT (Mobile Terminated) message using the TDMA protocol and fills the address of the MSC obtained at step 202 directly into the corresponding field in the MT message. The fetch-route-ID field is set to not fetch route, and a signaling access unit is informed to deliver the message to the obtained address of the MSC directly.

Step 309: Upon receiving the short message, the MSC delivers the short message to the MS.

Step 310: Because the MS has transferred to the TDMA communication network, the MS may identify the short message delivered according to the TDMA protocol and thus transmits a delivery-success response message to the MSC.

Step 311: Upon receiving the delivery-success response message, the MSC forwards the delivery-success response message to the SMSC.

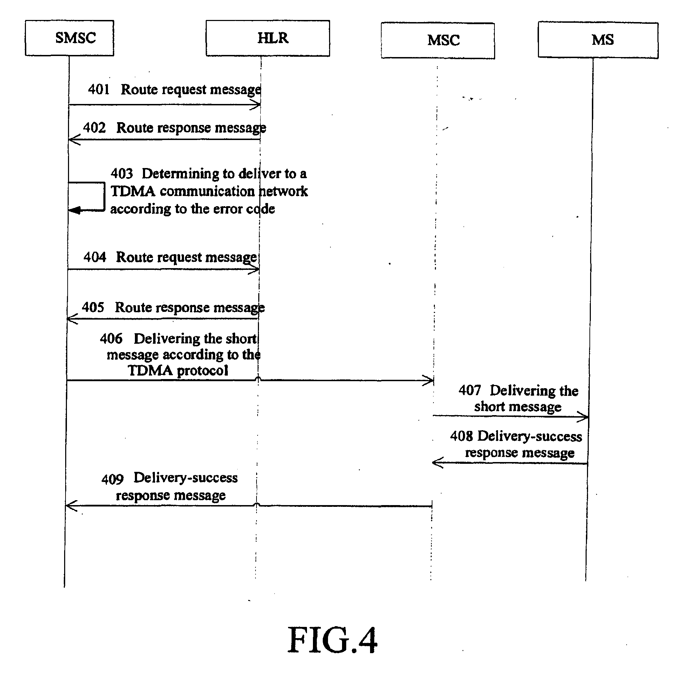

When the HLR and MSC are arranged separately, in the case where a subscriber transfers to another network, for example, the MS transferring permanently from the CDMA communication network to the TDMA communication network, a method for delivering short messages according to the embodiment is described with reference to Fig. 4.

Step 401: The SMSC determines a communication network (the CDMA communication network) which is used to deliver the short message to the called MS, according to the number of the called MS. Then the SMSC transmits a route request message to the HLR of the CDMA communication network.

Step 402: The HLR of the CDMA communication network transmits to the SMSC a route response message including some severe error information such as subscriber absence and/or IMSI fetching error.

Step 403: Upon receiving the severe error information such as subscriber absence and/or IMSI fetching error, the SMSC determines that the short message is to be delivered to the TDMA communication network, according to a network-transfer configuration rule.

The network-transfer configuration rule is exactly the same as the network-transfer configuration rules in the previous embodiments, except that the protocol error message is replaced with the severe error information such as subscriber absence and/or IMSI fetching error.

Step 404: The SMSC transmits a route request message to the HLR of the TDMA communication network.

Step 405: The HLR of the TDMA communication network transmits to the SMSC a route response message which carries address of the MSC of the TDMA communication network.

Step 406: The SMSC delivers the short message to the MSC of the TDMA communication network according to the TDMA protocol.

Step 407: Upon receiving the short message, the MSC of the TDMA communication network delivers the short message to the MS.

Step 408: Because the MS has transferred to the TDMA communication network, the MS may identify the short message delivered according to the TDMA protocol. As a result, the MS transmits a success response message to the MSC of the TDMA communication network.

Step 409: Upon receiving the success response message, the MSC of the TDMA communication network transmits the success response message to the SMSC.

According to the embodiments of the invention, the current communication network database may be configured at the SMSC. In case of network-transfer, the SMSC may record the current communication network of the MS in the current communication network database when a delivery-success response message is received. As a result, when a protocol error message is received from the called MS, the current communication network of the called MS may be determined by enquiring the current communication network database, and the short message may be delivered according to the protocol of the determined current communication network directly.

Moreover, in an embodiment of the invention, the HLR may set a power-on notification flag when the MS is powered off. When the called MS is powered on, the HLR transmits a power-on notification to the SMSC. Upon receiving the power-on notification, the SMSC delivers all the accumulated short messages for the called MS from the communication network which receives the power-on notification to the called MS.

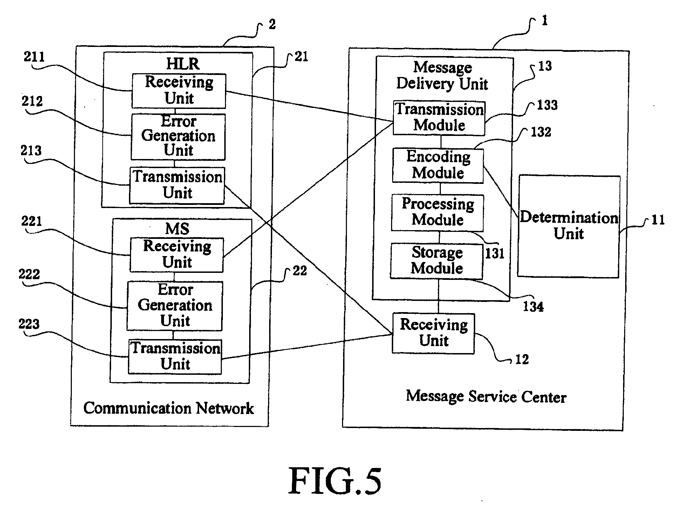

An embodiment of the invention discloses a system for delivering messages. As shown in Fig. 5, the system includes a message service center 1 configured to determine a communication network to which the message is to be delivered, deliver the message to the communication network and receive the error message from the communication network, and deliver the message to the communication network according to a network-transfer configuration rule upon receiving the error message. The system also includes a communication network 2, which is configured to receive the message delivered by the message service center or transmit an error message to the message service center.

The message service center 1 includes a determination unit 11 configured to determine an original communication network to which the message is to be delivered; a receiving unit 12 configured to receive an error message from the communication network or a delivery-success response message; a message delivery unit 13 configured to deliver the message to the communication network determined by the determination unit 11 according to network protocol of the communication network, and to determine a next communication network to which the message is to be delivered according to the error message received by the receiving unit 12 and the network-transfer configuration rule.

The message delivery unit 13 includes a processing module 131 configured to determine the next communication network to which the message is to be delivered according to the error message received by the receiving unit 12 and the network-transfer configuration rule; an encoding module 132 configured to encode the message according to the network protocol of the communication network determined by the determination unit 11 or the network protocol of the communication network determined by the processing unit 131; a transmission module 133 configured to deliver the encoded message encoded by the encoding module 132; and a storage module 134 configured to store a communication network ID of the MS when the receiving unit 12 receives a delivery-success response message. The determination unit 11 may determine the original network to which the message is to be delivered according to information in the storage module 134. The processing module 131 may also determine whether to determine a next communication network to which the message is to be delivered according to the information in the storage module. The storage module 134 may be also not present in the message delivery unit 13 and the receiving unit 12 is connected with the processing module 131 directly.

The message service center 1 stated above may be short message service center or multimedia service center.

The communication network 2 includes an HLR 21 configured to receive a route request message from the message service center 1. When the HLR 21 does not have subscriber data, the HLR transmits error information indicating subscriber absence or IMSI fetching error to the message service center 1. Alternatively, when the MS is powered off, the HLR set a power-on notification flag and transmits subscriber power-off information to the message service center 1, and when the MS is powered on, the HLR transmits a power-on notification to the message service center 1. The communication network 2 also includes an MS 22 configured to receive the message, generate a protocol error message when the MS 22 can not identify the network protocol used for the message, and transmit the protocol error message to the message service center 1.

The HLR 21 includes a receiving unit 211 configured to receive the route request message from the message service center 1; an error generation unit 212, which is configured to generate information indicating subscriber absence or IMSI fetching error when the HLR 21 does not have the subscriber data, and to initiate a transmission unit 213; and the transmission unit 213 configured to transmit the information indicating subscriber absence or IMSI fetching error to the message service center 1.

The MS 22 includes a receiving unit 211 configured to receive the message delivered by the message service center 1; an error generation unit 222 configured to generate a protocol error message when the network protocol used for the message received by the receiving unit 21 may not be identified, and to initiate a transmission unit 223; and the transmission unit 223 configured to transmit the protocol error message to the message service center 1.

It is seen from the above that the network-transfer configuration rule according to the embodiment of the invention addresses the error messages caused by network-transferring, where the error messages include errors such as protocol error, subscriber absence, illegal IMSI number, subscriber power-off.

The embodiments of the invention enable the flow of message delivery in the case of network transfer. In the case of network transfer, because the current communication network of the MS may not be determined, the message may be more likely to be successfully delivered by attempting through a plurality of communication networks. When all the communication networks are traversed, the current communication network of the MS may be certainly found, which ensures the successful delivery of the message to the MS. AS a result, the impact on the subscriber due to network-transfer may be eliminated and more means for enjoying service are provided to the subscriber so as to convenience the subscriber. In the flow of message delivery according to some embodiments, the route information is fetched from the HLR only once, which simplifies the flow of message delivery and improves the efficiency of message delivery. Furthermore, after a first time of successful message delivery, other messages may be delivered to the MS directly according to the current communication network recorded in the current communication network database, which improves the efficiency of message delivery.

The scope of the invention is defined by the appended claims.

## Claims

1. A method for delivering messages, the method being implemented by a message service center when a terminal to which a message is to be delivered makes network transfers among a plurality of communication networks, the method comprising:
determining (101) an original communication network to which the message is to be delivered according to a current communication network record of the terminal stored in a current communication network database;
delivering (102) the message to the original communication network; and
upon receiving an error message from the original communication network, determining (103) a next communication network to which the message is to be delivered according to a network-transfer configuration rule, wherein the network-transfer configuration rule specifies a sequence of communication networks used for delivering messages, and the next communication network being any communication network among the plurality of communication networks,
delivering (105) the message to the next communication network according to network protocol of the next communication network,
receiving (106) a response message for the short message delivery from the next communication network, and **characterized by**
updating (108) the current communication network database by recording the next communication network in the current communication network database if the response message is not an error message.

2. The method of claim 1, wherein the error message comprises: subscriber power-off information, subscriber absence information, IMSI fetching error information, or protocol error information.

3. The method of claim 2, further comprising:
determining whether the terminal makes network-transfer temporarily or permanently according to the error message;
determining the terminal as making network-transfer temporarily when the error message is subscriber power off information; and
determining the terminal as making network-transfer permanently when the error message is subscriber absence, IMSI fetching error, or protocol error.

4. The method of claim 3, wherein if the terminal makes network-transfer from the original communication network to another communication network permanently, the method further comprises the following step before delivering the message to the next communication network according to the network protocol of the next communication network:
determining whether the next communication network is the original communication network; and
stopping delivering the message if the next communication network is the original communication network.

5. The method of claim 3, further comprising: receiving a power-on notification message from the terminal;
wherein the determining a next communication network to which the message is to be delivered according to a network-transfer configuration rule comprises: determining the communication network from which the power-on notification message is received as the next communication network.

6. A system for delivering messages comprising:
a message service center (1), capable of communicating with a plurality of communication networks (2), wherein
the message service center (1) is configured to deliver messages when a terminal to which a message is to be delivered makes network transfers among the plurality of communication networks (2), comprising determining an original communication network to which the message is to be delivered according to a current communication network record of the terminal stored in a current communication network database, delivering the message to the original communication network and receiving an error message from the original communication network; and upon receiving an error message from the original communication network, determining a next communication network to which the message is to be delivered according to a network-transfer configuration rule, wherein the network-transfer configuration rule specifies a sequence of the communication networks used for delivering the messages and the next communication network being any communication network among the plurality of communication networks (2); delivering the message to the next communication network according to network protocol of the next communication network; receiving a response message for the short message delivery from the next communication network; and **characterized by** updating the current communication network database by recording the next communication network in the current communication network database if the response message is not an error message.

7. A message service center (1), the message service center (1) delivering messages when a terminal to which a message is to be delivered makes network transfers among a plurality of communication networks (2), the message service center (1) comprising:
a determination unit (11) configured to determine an original communication network to which the message is to be delivered according to a current communication network record of the terminal stored in a current communication network database;
a receiving unit (12) configured to receive an error message from a communication network or a delivery-success response message from the communication network; and
a message delivery unit (13) configured to deliver the message according to network protocol of the original communication network determined by the determination unit (11); or to determine a next communication network to which the message is to be delivered according to a network-transfer configuration rule and deliver the message to the next communication network,
wherein the message delivery unit (13) comprises:
a processing module (131) configured to determine the next communication network to which the message is to be delivered according to the network-transfer configuration rule, the next communication network being any communication network among the plurality of communication networks (2), when receiving an error message from the original communication network;
an encoding module (132) configured to encode the message according to the network protocol of the original communication network determined by the determination unit (11) or the network protocol of the next communication network determined by the processing module (131);
a transmission module (133) configured to deliver the message encoded by the encoding module (132); and **characterized by**
a storage module (134) configured to store the next communication network of the terminal in the current communication network database when the receiving unit receives a delivery-success response message.

8. The message service center of claim 7, wherein the error message comprises at least one of the following: subscriber power-off information, subscriber absence information, IMSI fetching error information and protocol error information.

## Patentansprüche

1. Verfahren zum Übermitteln von Nachrichten, wobei das Verfahren durch ein Message-Service-Center implementiert wird, wenn ein Endgerät, an das eine Nachricht übermittelt werden soll, Netztransfers unter mehreren Kommunikationsnetzen vornimmt, wobei das Verfahren Folgendes umfasst:
Bestimmen (101) eines ursprünglichen Kommunikationsnetzes, an das die Nachricht übermittelt werden soll, gemäß einer Aufzeichnung des aktuellen Kommunikationsnetzes des Endgeräts, die in einer Datenbank für das aktuelle Kommunikationsnetz gespeichert ist;
Übermitteln (102) der Nachricht an das ursprüngliche Kommunikationsnetz; und
nach dem Empfangen einer Fehlernachricht von dem ursprünglichen Kommunikationsnetz Bestimmen (103) eines nächsten Kommunikationsnetzes, an das die Nachricht übermittelt werden soll, gemäß einer Netztransferkonfigurationsregel, wobei die Netztransferkonfigurationsregel eine Sequenz von zum Übermitteln von Nachrichten genutzten Kommunikationsnetzen festlegt und wobei das nächste Kommunikationsnetz ein beliebiges Kommunikationsnetz unter den mehreren Kommunikationsnetzen ist,
Übermitteln (105) der Nachricht an das nächste Kommunikationsnetz gemäß einem Netzprotokoll des nächsten Kommunikationsnetzes,
Empfangen (106) einer Antwortnachricht für die Kurznachrichtenübermittlung von dem nächsten Kommunikationsnetz, und **gekennzeichnet durch** Aktualisieren (108) der Datenbank für das aktuelle Kommunikationsnetz **durch** Aufzeichnen des nächsten Kommunikationsnetzes in der Datenbank für das aktuelle Kommunikationsnetz, falls die Antwortnachricht keine Fehlernachricht ist.

2. Verfahren nach Anspruch 1, wobei die Fehlernachricht Folgendes umfasst:
Teilnehmerausschaltinformationen, Teilnehmerabwesenheitsinformationen, IMSI-Abruffehlerinformationen oder Protokollfehlerinformationen.

3. Verfahren nach Anspruch 2, das ferner Folgendes umfasst:
Bestimmen, ob das Endgerät einen Netztransfer vorübergehend oder dauerhaft vornimmt, gemäß der Fehlernachricht;
Bestimmen, dass das Endgerät einen Netztransfer vorübergehend vornimmt, wenn die Fehlernachricht Teilnehmerausschaltinformationen ist; und
Bestimmen, dass das Endgerät einen Netztransfer dauerhaft vornimmt, wenn die Fehlernachricht Teilnehmerabwesenheit, ein IMSI-Abruffehler oder ein Protokollfehler ist.

4. Verfahren nach Anspruch 3, wobei, falls das Endgerät einen Netztransfer von dem ursprünglichen Kommunikationsnetz an ein anderes Kommunikationsnetz dauerhaft vornimmt, das Verfahren vor dem Übermitteln der Nachricht an das nächste Kommunikationsnetz gemäß dem Netzprotokoll des nächsten Kommunikationsnetzes ferner den folgenden Schritt umfasst:
Bestimmen, ob das nächste Kommunikationsnetz das ursprüngliche Kommunikationsnetz ist; und
Beenden des Übermittelns der Nachricht, falls das nächste Kommunikationsnetz das ursprüngliche Kommunikationsnetz ist.

5. Verfahren nach Anspruch 3, das ferner Folgendes umfasst: Empfangen einer Einschaltmeldungsnachricht von dem Endgerät;
wobei das Bestimmen eines nächsten Kommunikationsnetzes, an das die Nachricht übermittelt werden soll, gemäß einer Netztransferkonfigurationsregel Folgendes umfasst: Bestimmen des Kommunikationsnetzes, von dem die Einschaltmeldungsnachricht empfangen wird, als das nächste Kommunikationsnetz.

6. System zum Übermitteln von Nachrichten, das Folgendes umfasst:
ein Message-Service-Center (1), das zum Kommunizieren mit mehreren Kommunikationsnetzen (2) fähig ist, wobei
das Message-Service-Center (1) konfiguriert ist, Nachrichten zu übermitteln, wenn ein Endgerät, an das eine Nachricht übermittelt werden soll, Netztransfers unter den mehreren Kommunikationsnetzen (2) vornimmt, umfassend Bestimmen eines ursprünglichen Kommunikationsnetzes, an das die Nachricht übermittelt werden soll, gemäß einer Aufzeichnung des aktuellen Kommunikationsnetzes des Endgeräts, die in einer Datenbank für das aktuelle Kommunikationsnetz gespeichert ist, Übermitteln der Nachricht an das ursprüngliche Kommunikationsnetz und Empfangen einer Fehlernachricht von dem ursprünglichen Kommunikationsnetz; und nach dem Empfangen einer Fehlernachricht von dem ursprünglichen Kommunikationsnetz Bestimmen eines nächsten Kommunikationsnetzes, an das die Nachricht übermittelt werden soll, gemäß einer Netztransferkonfigurationsregel, wobei die Netztransferkonfigurationsregel eine Sequenz der zum Übermitteln der Nachrichten genutzten Kommunikationsnetze festlegt und wobei das nächste Kommunikationsnetz ein beliebiges Kommunikationsnetz unter den mehreren Kommunikationsnetzen (2) ist; Übermitteln der Nachricht an das nächste Kommunikationsnetz gemäß einem Netzprotokoll des nächsten Kommunikationsnetzes; Empfangen einer Antwortnachricht für die Kurznachrichtenübermittlung von dem nächsten Kommunikationsnetz; und **gekennzeichnet durch** Aktualisieren der Datenbank für das aktuelle Kommunikationsnetz **durch** Aufzeichnen des nächsten Kommunikationsnetzes in der Datenbank für das aktuelle Kommunikationsnetz, falls die Antwortnachricht keine Fehlernachricht ist.

7. Message-Service-Center (1), wobei das Message-Service-Center (1) Nachrichten übermittelt, wenn ein Endgerät, an das eine Nachricht übermittelt werden soll, Netztransfers unter mehreren Kommunikationsnetzen (2) vornimmt, wobei das Message-Service-Center (1) Folgendes umfasst:
eine Bestimmungseinheit (11), die konfiguriert ist, ein ursprüngliches Kommunikationsnetz, an das die Nachricht übermittelt werden soll, gemäß einer Aufzeichnung des aktuellen Kommunikationsnetzes des Endgeräts, die in einer Datenbank für das aktuelle Kommunikationsnetz gespeichert ist, zu bestimmen;
eine Empfangseinheit (12), die konfiguriert ist, eine Fehlernachricht von einem Kommunikationsnetz oder eine Übermittlungserfolgsantwortnachricht von dem Kommunikationsnetz zu empfangen; und
eine Nachrichtenübermittlungseinheit (13), die konfiguriert ist, die Nachricht gemäß einem Netzprotokoll des ursprünglichen Kommunikationsnetzes, das durch die Bestimmungseinheit (11) bestimmt wurde, zu übermitteln; oder um ein nächstes Kommunikationsnetz, an das die Nachricht übermittelt werden soll, gemäß einer Netztransferkonfigurationsregel zu bestimmen und die Nachricht an das nächste Kommunikationsnetz zu übermitteln,
wobei die Nachrichtenübermittlungseinheit (13) Folgendes umfasst:
ein Verarbeitungsmodul (131), das konfiguriert ist, das nächste Kommunikationsnetz, an das die Nachricht übermittelt werden soll, gemäß der Netztransferkonfigurationsregel zu bestimmen, wobei das nächste Kommunikationsnetz ein beliebiges Kommunikationsnetz unter den mehreren Kommunikationsnetzen (2) ist, wenn eine Fehlernachricht von dem ursprünglichen Kommunikationsnetz empfangen wird;
ein Codiermodul (132), das konfiguriert ist, die Nachricht gemäß dem Netzprotokoll des ursprünglichen Kommunikationsnetzes, das durch die Bestimmungseinheit (11) bestimmt wurde, oder dem Netzprotokoll des nächsten Kommunikationsnetzes, das durch das Verarbeitungsmodul (131) bestimmt wurde, zu codieren;
ein Übertragungsmodul (133), das konfiguriert ist, die durch das Codiermodul (132) codierte Nachricht zu übermitteln; und **gekennzeichnet durch**
ein Speichermodul (134), das konfiguriert ist, das nächste Kommunikationsnetz des Endgeräts in der Datenbank für das aktuelle Kommunikationsnetz zu speichern, wenn die Empfangseinheit eine Übermittlungserfolgsantwortnachricht empfängt.

8. Message-Service-Center nach Anspruch 7, wobei die Fehlernachricht Folgendes umfasst: Teilnehmerausschaltinformationen und/oder Teilnehmerabwesenheitsinformationen und/oder IMSI-Abruffehlerinformationen und/oder Protokollfehlerinformationen.

## Revendications

1. Procédé de remise de messages, le procédé étant mis en oeuvre par un centre serveur de messages lorsqu'un terminal auquel un message doit être remis effectue des transferts de réseau entre une pluralité de réseaux de communication, le procédé comprenant les étapes consistant à :
déterminer (101) un réseau de communication d'origine auquel le message doit être remis en fonction d'un enregistrement de réseau de communication en cours du terminal stocké dans une base de données de réseau de communication en cours ;
remettre (102) le message au réseau de communication d'origine ; et
sur réception d'un message d'erreur en provenance du réseau de communication d'origine, déterminer (103) un prochain réseau de communication auquel le message doit être remis en fonction d'une règle de configuration de transfert de réseau, la règle de configuration de transfert de réseau stipulant une séquence de réseaux de communication utilisée pour remettre des messages, et le prochain réseau de communication étant un réseau de communication quelconque parmi la pluralité de réseaux de communication,
remettre (105) le message au prochain réseau de communication en fonction du protocole de réseau du prochain réseau de communication,
recevoir (106) un message de réponse pour la remise de message court en provenance du prochain réseau de communication, et **caractérisé par** l'étape consistant à actualiser (108) la base de données de réseau de communication en cours en enregistrant le prochain réseau de communication dans la base de données de réseau de communication en cours si le message de réponse n'est pas un message d'erreur.

2. Procédé selon la revendication 1, dans lequel le message d'erreur comprend : une information du type état hors tension d'abonné, une information du type absence d'abonné, une information du type erreur de récupération d'IMSI ou une information du type erreur de protocole.

3. Procédé selon la revendication 2, comprenant en outre les étapes consistant à :
déterminer si le terminal effectue un transfert de réseau à titre temporaire ou à titre permanent en fonction du message d'erreur ;
déterminer que le terminal effectue un transfert de réseau à titre temporaire si le message d'erreur est une information du type état hors tension d'abonné ; et
déterminer que le terminal effectue un transfert de réseau à titre permanent si le message d'erreur est une information du type absence d'abonné, erreur de récupération d'IMSI ou erreur de protocole.

4. Procédé selon la revendication 3, comprenant en outre, si le terminal effectue un transfert de réseau du réseau de communication d'origine vers un autre réseau de communication à titre permanent, les étapes consistant à, préalablement à l'étape consistant à remettre le message au prochain réseau de communication en fonction du protocole de réseau du prochain réseau de communication :
déterminer si le prochain réseau de communication est le réseau de communication d'origine ; et
interrompre la remise du message si le prochain réseau de communication est le réseau de communication d'origine.

5. Procédé selon la revendication 3, comprenant en outre l'étape consistant à : recevoir un message de notification d'état sous tension en provenance du terminal ;
laquelle étape consistant à déterminer un prochain réseau de communication auquel le message doit être remis en fonction d'une règle de configuration de transfert de réseau comprend l'étape consistant à : déterminer que le réseau de communication en provenance duquel le message de notification d'état sous tension est reçu est le prochain réseau de communication.

6. Système de remise de messages, comprenant :
un centre serveur de messages (1), apte à communiquer avec une pluralité de réseaux de communication (2),
lequel centre serveur de messages (1) est conçu pour remettre des messages lorsqu'un terminal auquel un message doit être remis effectue des transferts de réseau entre la pluralité de réseaux de communication (2), en mettant en oeuvre les étapes consistant à déterminer un réseau de communication d'origine auquel le message doit être remis en fonction d'un enregistrement de réseau de communication en cours du terminal stocké dans une base de données de réseau de communication en cours, remettre le message au réseau de communication d'origine et recevoir un message d'erreur en provenance du réseau de communication d'origine ; et sur réception d'un message d'erreur en provenance du réseau de communication d'origine, déterminer un prochain réseau de communication auquel le message doit être remis en fonction d'une règle de configuration de transfert de réseau, la règle de configuration de transfert de réseau stipulant une séquence des réseaux de communication utilisée pour remettre les messages, et le prochain réseau de communication étant un réseau de communication quelconque parmi la pluralité de réseaux de communication (2) ;
remettre le message au prochain réseau de communication en fonction du protocole de réseau du prochain réseau de communication ; recevoir un message de réponse pour la remise de message court en provenance du prochain réseau de communication ; et **caractérisé en ce qu'**il met en oeuvre l'étape consistant à actualiser la base de données de réseau de communication en cours en enregistrant le prochain réseau de communication dans la base de données de réseau de communication en cours si le message de réponse n'est pas un message d'erreur.

7. Centre serveur de messages (1), le centre serveur de messages (1) remettant des messages lorsqu'un terminal auquel un message doit être remis effectue des transferts de réseau entre une pluralité de réseaux de communication (2), le centre serveur de messages (1) comprenant :
une unité de détermination (11) conçue pour déterminer un réseau de communication d'origine auquel le message doit être remis en fonction d'un enregistrement de réseau de communication en cours du terminal stocké dans une base de données de réseau de communication en cours ;
une unité de réception (12) conçue pour recevoir un message d'erreur en provenance d'un réseau de communication ou un message de réponse de remise avec succès en provenance du réseau de communication ; et
une unité de remise de message (13) conçue pour remettre le message en fonction du protocole de réseau du réseau de communication d'origine déterminé par l'unité de détermination (11) ; ou pour déterminer un prochain réseau de communication auquel le message doit être remis en fonction d'une règle de configuration de transfert de réseau et remettre le message au prochain réseau de communication,
laquelle unité de remise de message (13) comprend :
un module de traitement (131) conçu pour déterminer le prochain réseau de communication auquel le message doit être remis en fonction de la règle de configuration de transfert de réseau, le prochain réseau de communication étant un réseau de communication quelconque parmi la pluralité de réseaux de communication (2), sur réception d'un message d'erreur en provenance du réseau de communication d'origine ;
un module de codage (132) conçu pour coder le message en fonction du protocole de réseau du réseau de communication d'origine déterminé par l'unité de détermination (11) ou du protocole de réseau du prochain réseau de communication déterminé par le module de traitement (131) ;
un module de transmission (133) conçu pour remettre le message codé par le module de codage (132) ; et **caractérisé par**
un module de stockage (134) conçu pour stocker le prochain réseau de communication du terminal dans la base de données de réseau de communication en cours lorsque l'unité de réception reçoit un message de réponse de remise avec succès.

8. Centre serveur de messages selon la revendication 7, dans lequel le message d'erreur comprend au moins une des informations suivantes : une information du type état hors tension d'abonné, une information du type absence d'abonné, une information du type erreur de récupération d'IMSI et une information du type erreur de protocole.
